# EUROPEAN PATENT APPLICATION

(11) **EP 4 757 285 A2**
(43) Date of publication of application: **10.06.2026**
(21) Application number: 24877526.4
(22) Date of filing: 11.10.2024
(51) Int. Cl.: H04L 65/75, H04N 21/61, H04W 4/06, H04L 65/611

(54) **USER TERMINAL, SERVER, AND SYSTEM FOR ENCODING VIDEO DATA, AND METHOD THEREFOR**

(30) Priority: 11.10.2023 KR 20230135074
(71) Applicant: LG Electronics Inc., Yeongdeungpo-gu Seoul 07336 (KR)
(72) Inventor: YOO, Huisang, Seoul 06772 (KR); KIM, Wooyoung, Seoul 06772 (KR); KIM, Sujin, Seoul 06772 (KR); HONG, Sungryong, Seoul 06772 (KR)
(74) Representative: Jung, Minkyu
(86) International application number: PCT/KR2024/015347
(87) International publication number: WO 2025/079990

(57) **Abstract**

A server is proposed. The server may comprise: a transceiver for transmitting and receiving data to and from a user terminal; and a processor for controlling the transceiver, wherein the processor is configured to acquire QoE traffic information, generate control information including information on a region of interest on the basis of the acquired QoE traffic information, and transmit the generated control information to the user terminal.

## Description

### [Technical Field]

The present disclosure relates to a user terminal, a server, and a system for encoding video data, and a method therefor.

### [Background]

In the 3rd generation project partner (3GPP), standardization of technologies for media streaming in a 5G environment is continuously progressing. Among them, 3GPP TS26.501 is establishing a system architecture for providing fast and stable media solutions using mobile edge computing (MEC). In the TS26.501, a 5G media streaming (5GMS) application function (AF) is defined in the MEC to exchange interfaces with a user terminal (UE) and an application provider.

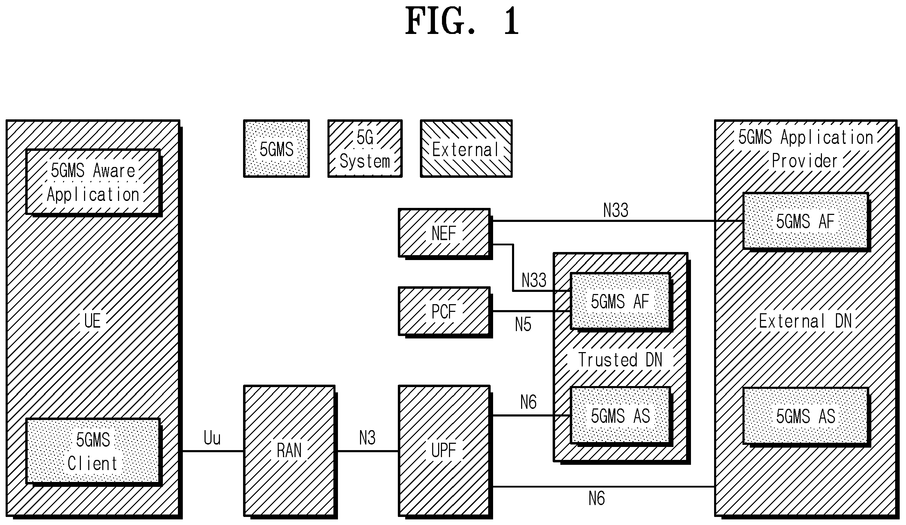

Further, the 5GMS AF is also in communication with a policy control function (PCF) of a 5G core system to determine a state of a 5G network. The standard defines a 5G media streaming application server (5GMS AS) to provide a download streaming service for content received from the application provider to the user terminal (UE) or support uplink streaming from the UE to the 5GMS application server (AS). FIG. 1 illustrates the architecture of the 5G media streaming defined in the 3GPP TS26.501.

With respect to FIG. 1, the streaming is defined as continuous media transmission over time. The streaming mainly refers to a fact that media is transmitted primarily in only one direction and consumed as it is received. Further, media content may be streamed as it is created, which is called live streaming. When content that has already been created is streamed, it is called on-demand streaming.

### [Summary]

### [Technical Problem]

The present disclosure is intended to propose a user terminal, a server, and a system for encoding video data, and a method therefor.

In more detail, the present disclosure is intended to propose a device, a method, or the like for encoding video data using variable, adaptive, or dynamic parameters when it is necessary to adjust an uplink stream bit rate depending on a network or service state.

Problems to be solved by the present disclosure are not limited to the problems mentioned above, and other problems not mentioned will be clearly understood by those skilled in the art to which the present disclosure pertains from the following description.

### [Technical Solutions]

Proposed is a user terminal comprising: a transceiver configured to transmit and receive data to and from a server; and a processor configured to encode video data to be transmitted to the server, wherein the processor is configured to: receive control information including information on a region of interest (ROI) from the server; and perform encoding for an ROI of an obtained image and encoding for a region outside the ROI of the obtained image based on the received control information.

Additionally or alternatively, the control information may include an x-axis coordinate, a y-axis coordinate, a width, a height, and a quantization parameter (QP) delta value of the ROI.

Additionally or alternatively, the control information may include an x-axis coordinate, a y-axis coordinate, a width, a height, and a quantization parameter (QP) delta value of the region outside the ROI.

Additionally or alternatively, the control information may be determined based on quality of experience (QoE) traffic information.

Additionally or alternatively, the processor may be configured to transmit video data including the encoded ROI of the obtained image and the encoded region outside the ROI of the obtained image to the server.

Proposed is a server comprising: a transceiver configured to transmit and receive data to and from a user terminal; and a processor for controlling the transceiver, wherein the processor is configured to: obtain quality of experience (QoE) traffic information; generate control information including information on a region of interest (ROI) based on the obtained QoE traffic information; and transmit the generated control information to the user terminal.

Additionally or alternatively, the processor may be configured to determine a necessity for adjusting a bit rate of an uplink stream of the user terminal based on the obtained QoE traffic information.

Additionally or alternatively, the processor may be configured to analyze an ROI of an obtained image as the bit rate of the uplink stream of the user terminal needs to be adjusted.

Additionally or alternatively, the control information may include an x-axis coordinate, a y-axis coordinate, a width, a height, and a quantization parameter (QP) delta value of the ROI.

Additionally or alternatively, the control information may include an x-axis coordinate, a y-axis coordinate, a width, a height, and a quantization parameter (QP) delta value of a region outside the ROI.

Additionally or alternatively, the processor may be configured to receive video data including an encoded ROI of an image obtained based on the control information and an encoded region outside the ROI of the obtained image from the user terminal.

Proposed is a system comprising: a user terminal; and a server configured to provide control information to the user terminal, wherein the user terminal is configured to transmit video data obtained by encoding an obtained image to the server, wherein the server is configured to transmit control information including information on a region of interest (ROI) of the obtained image to the user terminal, wherein the server generates the control information including the information on the ROI based on obtained quality of experience (QoE) traffic information, wherein the user terminal performs encoding for the ROI of the obtained image and encoding for a region outside the ROI of the obtained image based on the control information.

Additionally or alternatively, the control information may include an x-axis coordinate, a y-axis coordinate, a width, a height, and a quantization parameter (QP) delta value of the ROI.

Additionally or alternatively, the control information may include an x-axis coordinate, a y-axis coordinate, a width, a height, and a quantization parameter (QP) delta value of the region outside the ROI.

Additionally or alternatively, the video data may include the ROI of the obtained image encoded with a first quantization parameter (QP) and the region outside the ROI of the obtained image encoded with a second QP.

The above-described technical solutions are merely some of the embodiments of the present disclosure, and various embodiments in which the technical features of the present disclosure are reflected may be derived and understood by those skilled in the art based on the detailed description of the present disclosure to be described below.

### [Advantageous Effects]

The present disclosure has following effects.

The present disclosure may deliver the information on the region of interest for encoding the video data from the server to the user terminal.

The present disclosure may ensure an appropriate quality of the video data depending on network or service quality.

Effects according to the present disclosure are not limited to the above-mentioned effects, and other effects not mentioned will be clearly understood by those skilled in the art to which the present disclosure pertains from the following detailed description of the present disclosure.

### [Brief Description of the Drawings]

Accompanying drawings, which are included as part of a detailed description to help understand the present disclosure, provide embodiments of the present disclosure, and illustrate the technical spirit of the present disclosure together with the detailed description.
FIG. 1 illustrates an architecture representing a particular 5GMS function within a 5G system.
FIG. 2 illustrates a generalization of an architecture illustrated in FIG. 1.
FIG. 3 illustrates a 5G unicast downlink media streaming architecture.
FIG. 4 illustrates a 5GMS architecture according to an embodiment of the present disclosure.
FIG. 5 illustrates a procedure for encoding video data based on information on a region of interest according to an embodiment of the present disclosure.
FIG. 6 illustrates a system diagram in a scenario according to an embodiment of the present disclosure.
FIG. 7 illustrates video data encoded in a scenario according to an embodiment of the present disclosure.
FIG. 8 illustrates a system diagram of a scenario according to another embodiment of the present disclosure.
FIG. 9 is a block diagram of a server and a user terminal according to the present disclosure.

### [Best Mode]

Hereinafter, the embodiments disclosed herein will be described in detail with reference to the accompanying drawings, but components that are the same as or similar to each other regardless of reference numerals will be given the same reference numerals, and redundant description thereof will be omitted. The suffixes "module" and "unit" for components used in the following description are given or used together in consideration of ease of writing the present document, and do not have meanings or roles that are distinct from each other by themselves. Further, in describing the embodiments disclosed herein, when it is determined that a detailed description of related known technologies may unnecessarily obscure the gist of the embodiments disclosed herein, detailed description thereof will be omitted. In addition, the attached drawings are provided for easy understanding of the embodiments disclosed herein and do not limit technical idea disclosed herein, and should be construed as including all modifications, equivalents, and alternatives falling within the spirit and scope of the present disclosure.

Although terms including ordinal numbers, such as first, second, and the like, may be used to describe various components, the components are not be limited by the terms. The terms are only used to distinguish one component from another.

It should be understood that when a component is referred to as being "connected with" another component, the component may be directly connected with another component or an intervening component may also be present. In contrast, it should be understood that when a component is referred to as being "directly connected with" another component, there is no intervening component present.

A singular representation may include a plural representation unless it represents a definitely different meaning from the context.

The terms "includes" or "has" used herein should be understood as not precluding possibility of existence or addition of one or more other characteristics, figures, steps, operations, constituents, components, or combinations thereof.

A 5GMS application provider uses 5GMS for a streaming service. The streaming service provides a 5GMS Aware-application using an interface and an API defined in 5GMS to utilize a 5GMS client and a network function in a UE.

The 5GMS application provider and the 5GMS Aware-application are defined as follows:
- 5GMS application provider: an entity that interacts with functions of a 5GMS system and provides the 5GMS-Aware application that interacts with the functions of the 5GMS system
- 5GMS-Aware application: an application in the UE provided by the 5GMS application provider, including service logic of a 5GMS application service, and interacting with other 5GMS clients and network functions via the interface and the API defined in the 5GMS architecture

The architecture in FIG. 1 represents a specific 5GMS function in a 5G system (5GS). The corresponding architecture defines following three main functions:
- 5GMS AF: an application function similar to an application function defined in section 6.2.10 of TS 23.501 that is dedicated to the 5G media streaming
- 5GMS AS: an application server that is dedicated to the 5G media streaming
- 5GMS client: a UE internal function that is dedicated to the 5G media streaming. The 5GMS client is a logical function and sub-functions thereof are able to be distributed within the UE depending on an implementation choice

The 5GMS AF and the 5GMS AS are data network (DN) functions and are in communication with the UE over N6 as defined in the TS 23.501.

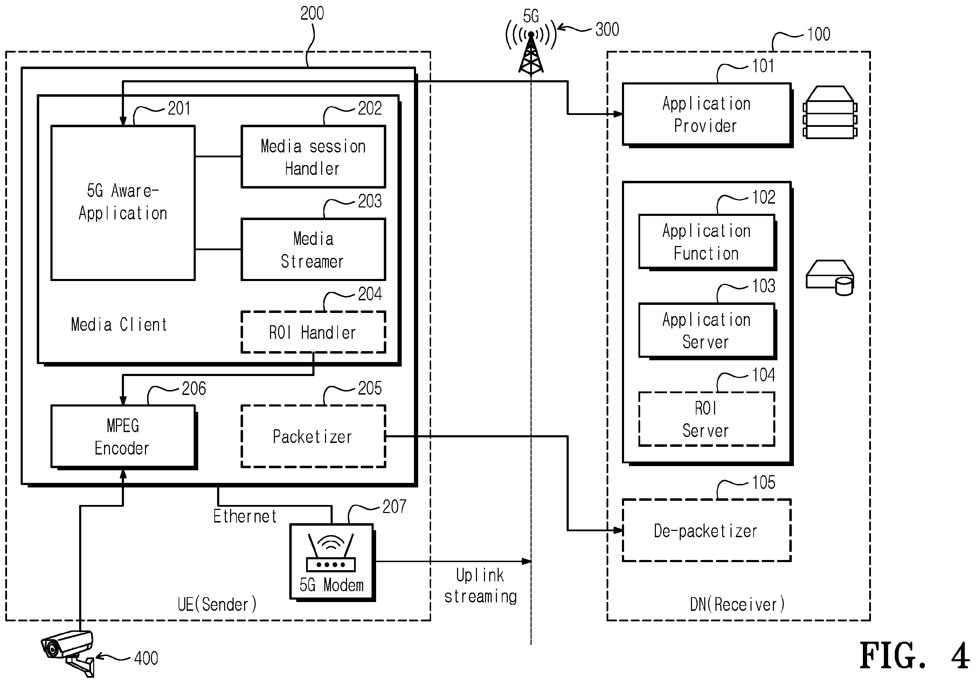

A function within a trusted DN, i.e. a 5GMS AF within the trusted DN is trusted in an operator network as shown in FIG. 4.2.3-5 of the TS 23.501. Therefore, such AF may be in direct communication with a relevant 5G core function.

A function within an external DN, for example, a 5GMS AF within the external DN, may only be in communication with the 5G core function when using N33 via an NEF.

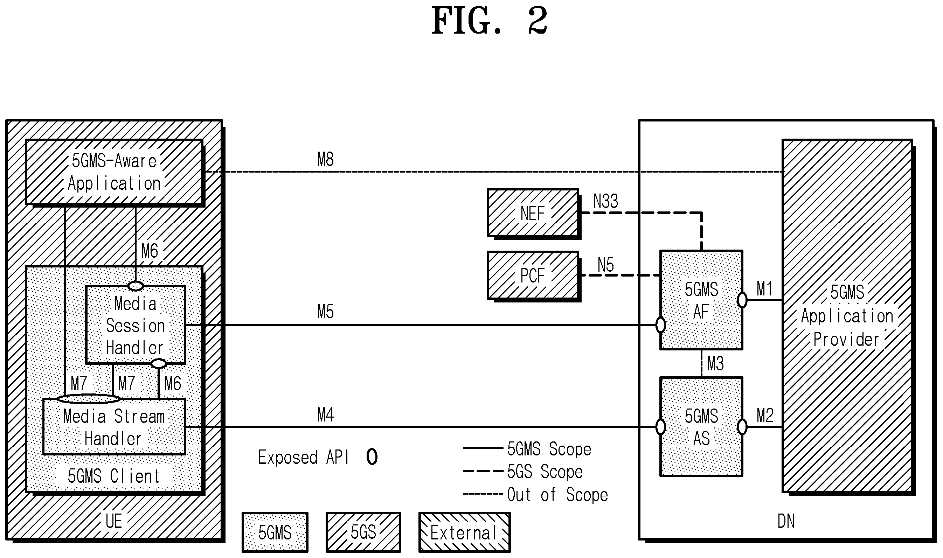

The 5GMS architecture maps an overall high-level architecture illustrated in FIG. 1 above to a generic architecture illustrated in FIG. 2.

The corresponding architecture addresses two main scenarios for an individual media streaming task:
- Downlink streaming: a network is an origin of media and the UE acts as a consuming entity
- Uplink streaming: the UE is the origin of the media and the network acts as the consuming entity

A functional entity and an interface of the generic media streaming architecture may be described with specifics related to the downlink and uplink streaming, but in the present document, only the downlink will be described. To this end, the corresponding description will be made by adding a suffix "d" to an appropriate downlink function in each case.

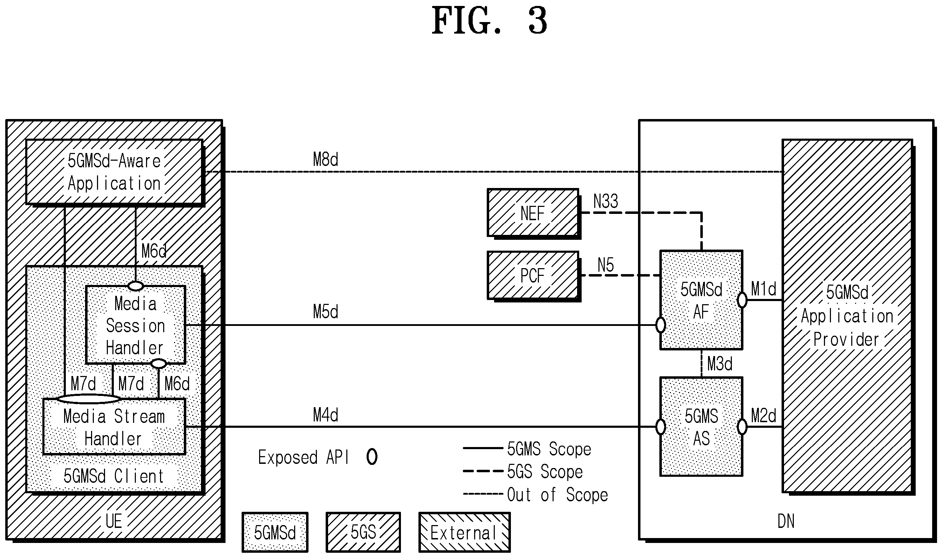

FIG. 3 illustrates a 5G unicast downlink media streaming architecture. The following is a description of an interfaces defined for 5G unicast downlink media streaming, as illustrated in FIG. 3.

M1d (5GMSd provisioning API): an external API exposed from a 5GMSd AF, allowing a 5GMSd application provider to provision use of the 5G media streaming system for the downlink media streaming and receive feedback.

M2d (SGMSd ingest API): an optional external API used when selected by a 5GMSd AS, and used when hosting content for the streaming service within the trusted DN.

M3d: (internal and unspecified): an internal API used to exchange information on content hosting with the 5GMSd AS within the trusted DN.

M4d (media streaming API): an API exposed from the 5GMSd AS to stream the media content to a media player.

M5d (media session handling API): an API exposed from the 5GMSd AF to a media session handler, used for media session handling, control, reporting, and support, and including an appropriate security mechanism such as authorization and authentication.

M6d (UE media session handling API): an API exposed from the media session handler to the media player, used for client internal communication, and exposed to a SGMSd-aware application to utilize a 5GMS feature.

M7d (UE media player API): an API exposed from the media player to the SGMSd-aware application and the media session handler, allowing the media player to be utilized.

M8d: (application API): an application interface used for information exchange between the SGMSd-aware application and a 5GMSd application provider, located outside the 5G system, and not specified by the 5GMS.

The 3GPP TS26.501 was proposed with a technical goal of transmitting data for the media streaming, file downloading, and the like to a plurality of user terminal (UE) at the same time point over the 5G network.

A 5G media streaming scheme supports two media formats: MPEG's DASH based on HTTP and Apple's HLS. The 5G media streaming (5GMS) technology has an advantage of being able to provide the corresponding service without an additional load resulted from an increase in the number of user terminal present within the same cell because the plurality of user terminal are able to receive the same multimedia data at the same time point. Such technology may be applied to various services such as a mobile TV, an IoT, a connected car, an SW update of a terminal and an application using an idle time, real-time information transmission to a customer in a specific space, and data offloading.

The 3GPP TS26.501 standard was proposed with a technical goal of transmitting data for media streaming, file download, and the like to a majority of terminals at the same time over a 5G network.

The 5G media streaming (5GMS) technology enables a majority of users to receive the same multimedia data at the same time, and thus has an advantage of providing the corresponding service without an additional load caused by an increase in the number of terminals existing in the same cell. Such a technology may be applied to various services such as CCTV video surveillance, mobile TVs, IoTs, connected cars, SW update of terminals and applications using idle periods, real-time information delivery to customers in specific spaces, and data offloading.

In particular, as the market shifts toward smart factories, demand for integrated surveillance and intelligent application services combined with MEC servers is increasing in the field of CCTV video surveillance. Accordingly, there is a need for high-efficiency/lossless transmission technologies for overcoming uplink transmission throughput constraints, as well as customized services based on customer-specific functions.

However, as shown in FIG. 1, in the 5GMS standard, specific operations for supporting the high-efficiency/lossless transmission technologies and the customized services based on the customer-specific functions are not defined. Further, there are no means to provide such technologies and services based on a 5GMS architecture in the CCTV video surveillance field, so that such technologies and services are not able to be extended to application services.

The present disclosure proposes a transceiver, a packet structure, and an identification scheme capable of adjusting image quality for each region of interest in a 5GMS transmission/reception environment based on the standard 5GMS architecture.

FIG. 4 illustrates a 5GMS architecture according to an embodiment of the present disclosure.

FIG. 4 illustrates an operational scheme by defining modules constituting a 5GMS transceiver server 100 and a terminal 200, which together constitute a transceiver structure capable of adjusting the image quality on a per-ROI basis within one video frame, in order to efficiently control an uplink stream bit rate according to a 5G network traffic situation based on a 5GMS architecture.

In the present proposal, in order to provide the function for adjusting the image quality on a per-region-of-interest (ROI) basis within one video frame based on the standard 5GMS architecture, an ROI handler 204 is defined as a new module in the 5GMS receiver.

Table 1 defines detailed roles of uplink transmission system modules for 5GMS region-of-interest setting.

**[Table 1]**

| Module | Description |
|---|---|
| Media session handler 202 | Performs communication with the 5GMSu AF for setting and controlling media sessions, collects and reports consumption information and QoE metrics, and provides interfaces for use by the 5GMSu-aware application. |
| Media streamer 203 | Communicates with the 5GMSu AS to stream media content over an uplink path, and provides APIs to the 5GMSu-aware application for media playback and to the media session handler for media session control. |
| ROI handler 204 | Operates a transmitter media encoder for compressing and encoding the media content. Performs content and service synchronization based on data encoded through a streaming encoder, a file encoder, and an upload encoder. Is responsible for ROI-based image quality adjustment through AV rate control and monitoring such that IP-based AV data is delivered to the packetizer in a synchronized manner for wireless transmission via the 5G physical layer. |
| 5GMSu aware application 201 | Is an application for controlling the 5GMSu client, providing service provider logic, and setting media sessions, and uses 5GMSu interfaces and APIs to interact with the client. |
| Packetizer (or transmitter) 205 | Is responsible for generating packets for 5G media transmission. |
| 5GMSu application server 103 | Is an application server that hosts a 5G media function, and may be another server such as a CDN. |
| 5GMSu application function 102 | Provides a variety of control functions to the media session handler and requests other policies through 5G core network functions, such as PCF or NEF. |
| 5GMSu application provider 101 | Provides an external application or a content-specific media function, such as creation, encoding, and formatting of media that is streamed over the uplink path. |
| ROI server 104 | Is a server for setting an ROI for 5G media, and may be another server such as a CDN. |
| De-packetizer (or receiver) 105 | Is responsible for parsing SRT packets for 5G media reception. |

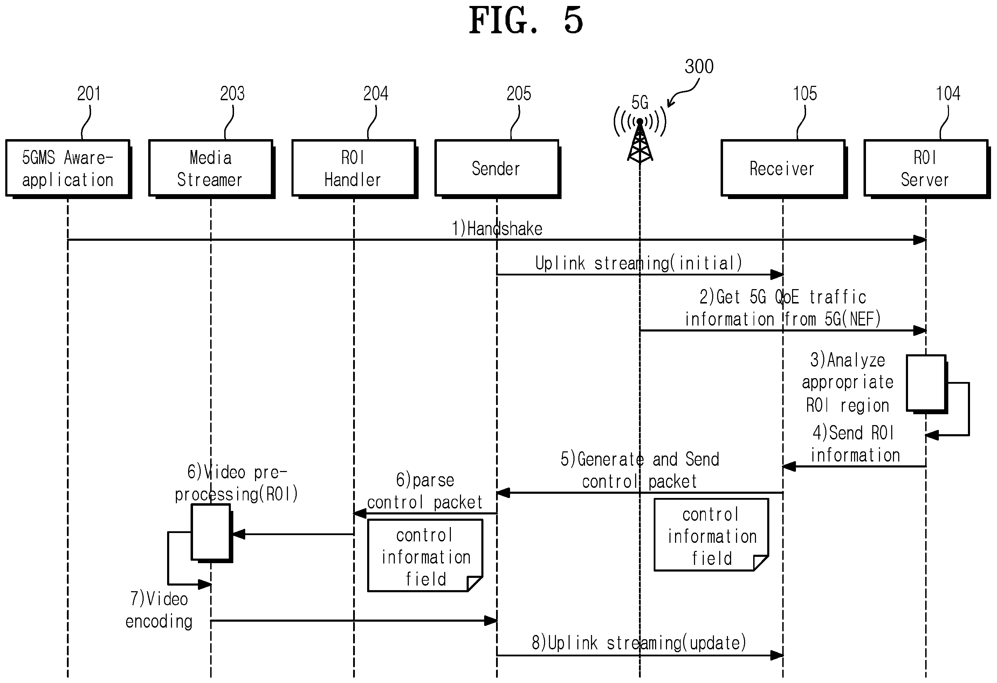

FIG. 5 illustrates a procedure for encoding video data based on information on a region of interest according to an embodiment of the present disclosure.

A procedure for providing a function of adjusting an output bit rate of a video encoder 206 of the user terminal, through control capable of adjusting the image quality for each region of interest within a video frame performed at a data network (DN) server based on the standard 5GMS architecture is illustrated. A detailed description of each step is as follows.
1) The user terminal 200 (or the 5G aware-application 201) and the server 100 (or the ROI server 104) may perform a handshake operation to adjust the output bit rate of the video encoder based on the region of interest. Through the handshake process, provisioning sessions may be generated, and the uplink streaming may be performed based on the 5GMS standard.
2) The server 100 (or the ROI server 104) may obtain QoE traffic information through a 5G core network exposure function (NEF) in real time. When it is determined, based on the QoE traffic information, that the adjustment of the uplink stream bit rate is required at the user terminal 200, the server 100 (or the ROI server 104) may perform ROI analysis processing on the video data to perform control for adjusting video compression transmission bit rates for the ROI and a region outside the ROI.
3) The server 100 (or the ROI server 104) may analyze the ROI and the region outside the ROI to generate control information for ROI settings for the user terminal 200.
4) The server 100 (or the ROI server 104) may deliver the control information for the ROI settings to the receiver 105 such that a packet for delivering the control information may be generated.
5) The server 100 (or the ROI server 104) may generate the packet including the control information such that the user terminal 200 may adjust image quality for each ROI within a video frame. In addition, the server 100 (or the ROI server 104) may include information on the ROI settings in a control information field of the generated packet. The server 100 (or the ROI server 104) may transmit the generated packet to the user terminal 200. As described above, because it is a transaction through the handshake, the packet delivery from the receiver 105 of the server 100 to the transmitter 205 of the user terminal 200 is enabled.
6) The transmitter 205 of the user terminal 200 may parse the received packet, and obtain the control information field therefrom. The transmitter 205 of the user terminal 200 may deliver the obtained control information field to the ROI handler 204.
7) The user terminal 200 (or the ROI handler 204) may parse the control information field, and deliver the same to the media streamer 203. The media streamer 203 may use the control information field to specify quantization parameter (QP) delta values for the respective ROI and region outside the ROI through pre-processing of the video encoder, and deliver the specified values to the video encoder 206.
8) The user terminal 200 (or the video streamer 203) may reflect the QP delta values input through video pre-processing during encoding to adjust the video compression transmission bit rate according to the video quality set by the server 100, thereby adjusting uplink streaming quality.

The above-mentioned control information field for the ROI settings may be expressed as follows.

**[Table 2]**

| **Property name** | **Type** | **Description** |
|---|---|---|
| *resolution* | Int16 | Resolution |
| *framerate* | Int16 | Frame rate |
| *bitrate* | Int16 | Bit rate |
| *qp*_*range* | Int16 | QP delta value range (0 to 50) |
| *ratecontrol-enable* | bool | Whether rate control is enabled |
| *Insert-sps-pps* | bool | Whether SPS and PPS information is inserted |
| *iframeinterval* | | I frame generation interval |
| *RegionForROI[]* | | |
| *x* | Int16 | x coordinate |
| *y* | Int16 | y coordinate |
| *width* | Int16 | Width |
| *height* | Int16 | Height |
| *qp_delta* | Int16 | QP delta value (-10 to +10) |

When a plurality of ROIs exist within one video frame, a plurality of instances of RegionForROI may be included.

In addition, although not shown in Table 2, information on the region outside the ROI may be obtained from the ROI information or may be separately included in the control information field.

The information on the region outside the ROI, like the information on the ROI, may include an x-axis coordinate, a y-axis coordinate, a width, a height, and a QP delta value of the region outside the ROI.

Recently, applications using CCTVs for purposes, such as real-time object or threat detection and tracking and collection of criminal evidence, have been expanding, and securing high-quality images is a key element of such technologies. In data transmission using 5G, image quality at a decoder has a trade-off relationship with a network transmission rate. Although transmission may be performed at a high bit rate in order to secure high-quality images, in general, the transmission rate is not able to be increased due to restrictions or limitations of uplink resources of the 5G network. Accordingly, image processing for obtaining optimal image quality of an object in a given environment is very important.

The scheme proposed in the present disclosure is a media processing and transmission technology that may be commonly applied across various 5G vertical fields, and may be widely applied not only to 5G public networks and 5G specialized networks, but also to the cooperative-intelligent transport system (C-ITS) field. In particular, the proposed method is expected to be highly applicable to the vehicle-to-x (V2X) field.

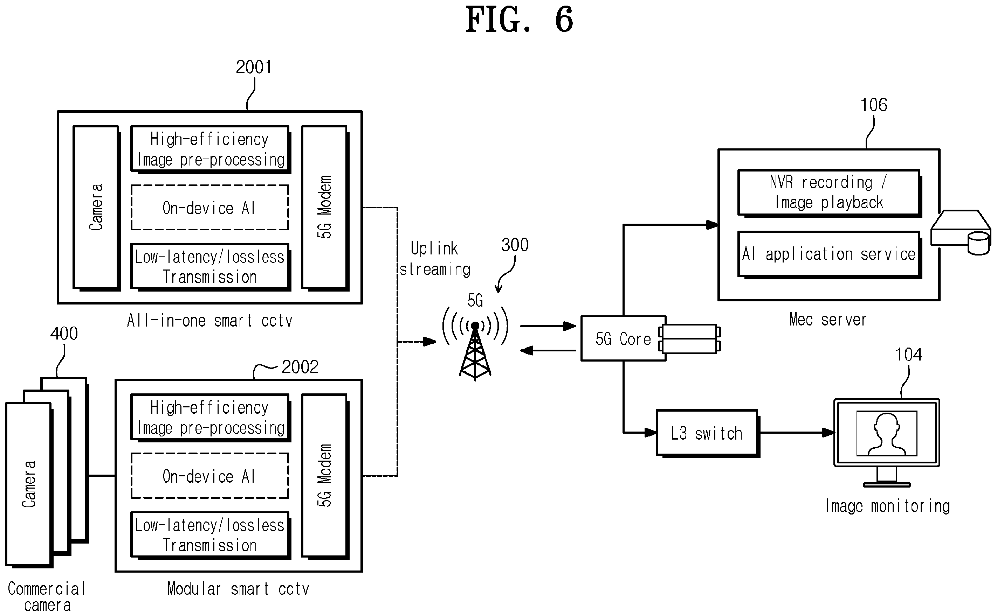

FIG. 6 illustrates a system diagram in a scenario according to an embodiment of the present disclosure.

FIG. 6 relates to an application of a transceiver system capable of adjusting image quality on a per-ROI basis within one video frame to efficiently control the uplink stream bit rate according to a 5G network traffic situation. Illustrated is a 5G-based media transmission solution capable of efficiently managing transmission bandwidth by reducing image quality and bit rates for redundant areas when storing or transmitting multiple videos having redundant areas in video surveillance over the 5G network.

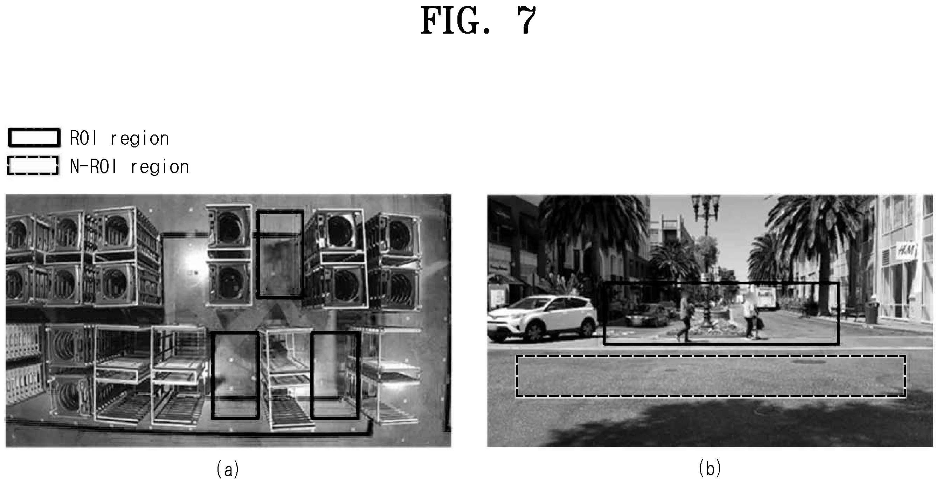

FIG. 7 illustrates an example of a surveillance screen in which an administrator may adaptively adjust image quality based on an ROI and a region outside the ROI in video surveillance according to FIG. 6. The ROI and the region outside the ROI may be separated from each other in video surveillance to increase media transmission efficiency by reducing bit rates for redundant areas. An actual example of setting the ROI and the region outside the ROI on the video surveillance screen is shown.

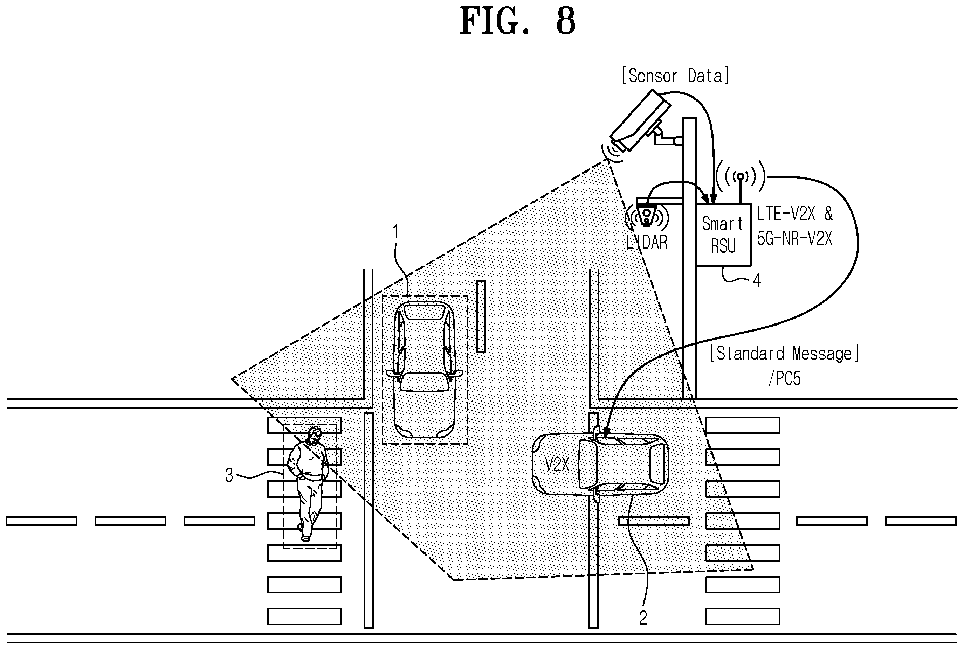

FIG. 8 illustrates a system diagram of a scenario according to another embodiment of the present disclosure.

FIG. 8 illustrates an overall system diagram of a traffic safety solution for predicting a collision with other users and providing a warning in advance when there is a possibility of a collision to prevent an accident by installing a traffic safety app (soft V2X app) for pedestrians on a smartphone. The soft V2X app enables exchange of V2X data between V2X devices, such as a connected vehicle 2 supporting V2X, and a general vehicle 1, which does not support the V2X, or a pedestrian 3.

The soft V2X app may periodically exchange location and movement (direction, speed, and the like) information with a nearby soft V2X app, and predict a possibility of a collision with the user in real time by utilizing the exchanged information (i.e. information on a nearby pedestrian or vehicle). The soft V2X app may be in communication with a smart RSU 4 that obtains information on a nearby object or moving entity through various sensors, or obtains V2X data from the object or the moving entity.

When the possibility of collision is high, the possibility of collision may be delivered as a notification to the user through sound, vibration, or the like. The soft V2X app supports various modes such as a vehicle, a pedestrian, a two-wheeled vehicle, and an emergency vehicle. In order to efficiently transmit the uplink transmission bit rate based on the 5G network traffic situation on a road on which a large number of detectable objects exist, a transceiver system capable of adjusting image quality on a per-region-of-interest basis within one video frame may be applied, and the system may be useful in detecting redundant detection regions across multiple cameras.

In addition, although not shown, the above-described per-region-of-interest-based bit rate adjustment within a video frame may be applied to travel surveillance of an autonomous robot or a moving entity. A surveillance server may receive an image obtained from a camera sensor installed on the autonomous robot or the moving entity. However, even in this case, there may be restrictions or limitations on the uplink resources depending on the 5G network traffic. In this case, the region of interest may be set in a video frame obtained from the camera sensor of the autonomous robot or the moving entity, the region of interest may be encoded by applying a first QP, and the region outside the ROI may be encoded by applying a second QP.

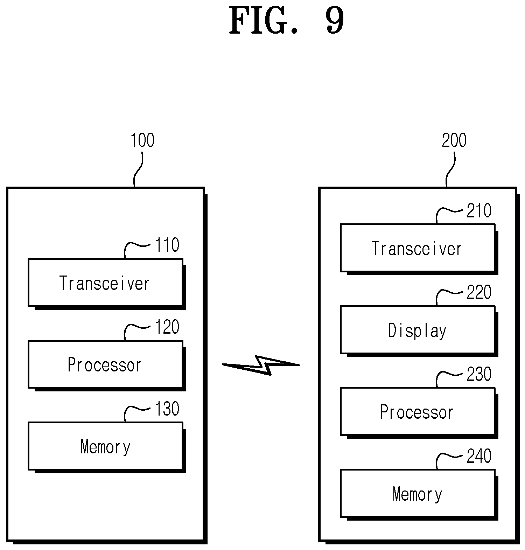

FIG. 9 is a block diagram of the server 100 and the user terminal 200 according to the present disclosure.

The server 100 includes a transceiver 110 that transmits and receives data to and from the user terminal 200, and a processor 120 for controlling the transceiver. In addition, the server 100 may include a memory 130 that generates and stores information related to the present disclosure, for example, as shown in Table 1.

The processor 120 may obtain QoE traffic information from a 5G NEF. In addition, the processor 120 may be configured to generate control information including information on a region of interest (ROI) based on the obtained QoE traffic information, and transmit the generated control information to the user terminal 200.

In this regard, the control information may include an x-axis coordinate and a y-axis coordinate, a width, a height, and a quantization parameter (QP) delta value of the ROI. In addition, the control information may include an x-axis coordinate and a y-axis coordinate, a width, a height, and a quantization parameter (QP) delta value of a region outside the ROI. The control information may be determined based on the quality of experience (QoE) traffic information.

The processor 120 may be configured to determine a necessity for adjusting a bit rate of an uplink stream of the user terminal 200 based on the obtained QoE traffic information.

The processor 120 may be configured to analyze an ROI of an obtained image as the bit rate of the uplink stream of the user terminal 200 needs to be adjusted.

The processor 120 may be configured to receive video data including the encoded ROI of the obtained image and an encoded region outside the ROI of the obtained image based on the control information from the user terminal 200.

The user terminal 200 may include a transceiver 210 that transmits and receives data to and from the server 100, and a processor 230 that is configured to encode video data to be transmitted to the server 100. In addition, the user terminal 200 may include a display 220 that outputs the video data to be transmitted to the server 100 or outputs information received from the server 100. In addition, the user terminal 200 may include a memory 240 that generates and stores information related to the present disclosure, for example, as shown in Table 1.

The processor 230 may be configured to receive control information including information on a region of interest (ROI) from the server 100. In addition, the processor 230 may be configured to perform encoding for an ROI of an obtained image and for a region outside the ROI of the obtained image based on the received control information.

In addition, the processor 230 may be configured to transmit video data including the encoded ROI of the obtained image and the encoded region outside the ROI of the obtained image to the server 100.

The contents described above with reference to FIGS. 1 to 8, which are not described with reference to FIG. 9, may be applied to the server 100 or the terminal 200.

In one example, the present disclosure may be implemented as a system composed of the server 100 and the user terminal 200 as illustrated in FIG. 9. The system may realize the content, the features, the procedures, and the like related to FIGs. 4 to 5 described above and perform the operation of the server 100 or the user terminal 200 described with reference to FIG. 9. To avoid redundant description, a specific description of the corresponding system will be omitted.

In another aspect of the present disclosure, the above-described proposals or operations may be provided as code that is capable of being implemented, performed, or executed by computers (herein, the computer is a comprehensive concept including a system on chip (SoC), a processor, a microprocessor etc.) or a computer-readable storage medium or computer program product storing or including the code. The scope of the present disclosure may be extended to the code or the computer-readable storage medium or computer program product storing or including the code.

The preferred embodiments of the present disclosure are provided to allow those skilled in the art to implement and embody the present disclosure. While the present disclosure has been described and illustrated herein with reference to the preferred embodiments thereof, it is understood to those skilled in the art that various modifications and variations could be made therein without departing from the scope of the disclosure. Therefore, the present disclosure is not limited to the embodiments disclosed herein but intends to give the broadest scope consistent with the new principles and features disclosed herein.

## Claims

1. A user terminal comprising:
a transceiver configured to transmit and receive data to and from a server; and
a processor configured to encode video data to be transmitted to the server,
wherein the processor is configured to:
receive control information including information on a region of interest (ROI) from the server; and
perform encoding for an ROI of an obtained image and encoding for a region outside the ROI of the obtained image based on the received control information.

2. The user terminal of claim 1, wherein the control information includes an x-axis coordinate, a y-axis coordinate, a width, a height, and a quantization parameter (QP) delta value of the ROI.

3. The user terminal of claim 1, wherein the control information includes an x-axis coordinate, a y-axis coordinate, a width, a height, and a quantization parameter (QP) delta value of the region outside the ROI.

4. The user terminal of any one of claims 2 to 3, wherein the control information is determined based on quality of experience (QoE) traffic information.

5. The user terminal of any one of claims 1 and 2, wherein the processor is configured to transmit video data including the encoded ROI of the obtained image and the encoded region outside the ROI of the obtained image to the server.

6. A server comprising:
a transceiver configured to transmit and receive data to and from a user terminal; and
a processor for controlling the transceiver,
wherein the processor is configured to:
obtain quality of experience (QoE) traffic information;
generate control information including information on a region of interest (ROI) based on the obtained QoE traffic information; and
transmit the generated control information to the user terminal.

7. The server of claim 6, wherein the processor is configured to determine a necessity for adjusting a bit rate of an uplink stream of the user terminal based on the obtained QoE traffic information.

8. The server of claim 7, wherein the processor is configured to analyze an ROI of an obtained image as the bit rate of the uplink stream of the user terminal needs to be adjusted.

9. The server of claim 6, wherein the control information includes an x-axis coordinate, a y-axis coordinate, a width, a height, and a quantization parameter (QP) delta value of the ROI.

10. The server of claim 6, wherein the control information includes an x-axis coordinate, a y-axis coordinate, a width, a height, and a quantization parameter (QP) delta value of a region outside the ROI.

11. The server of claim 6, wherein the processor is configured to receive video data including an encoded ROI of an image obtained based on the control information and an encoded region outside the ROI of the obtained image from the user terminal.

12. A system comprising:
a user terminal; and
a server configured to provide control information to the user terminal,
wherein the user terminal is configured to transmit video data obtained by encoding an obtained image to the server,
wherein the server is configured to transmit control information including information on a region of interest (ROI) of the obtained image to the user terminal,
wherein the server generates the control information including the information on the ROI based on obtained quality of experience (QoE) traffic information,
wherein the user terminal performs encoding for the ROI of the obtained image and encoding for a region outside the ROI of the obtained image based on the control information.

13. The system of claim 12, wherein the control information includes an x-axis coordinate, a y-axis coordinate, a width, a height, and a quantization parameter (QP) delta value of the ROI.

14. The system of claim 12, wherein the control information includes an x-axis coordinate, a y-axis coordinate, a width, a height, and a quantization parameter (QP) delta value of the region outside the ROI.

15. The system of claim 12, wherein the video data includes the ROI of the obtained image encoded with a first quantization parameter (QP) and the region outside the ROI of the obtained image encoded with a second QP.
